# EUROPÄISCHE PATENTSCHRIFT

(11) **EP 2 964 976 B1**
(45) Veröffentlichungstag und Bekanntmachung des Hinweises auf die Patenterteilung: **07.12.2016**
(21) Anmeldenummer: 14704525.6
(22) Anmeldetag: 12.02.2014
(51) Int. Cl.: F16H 1/22, F16H 37/06, H02K 7/116, F16H 57/025, F16H 57/033

(54) **GETRIEBEMOTORANORDNUNG**
GEARED MOTOR ARRANGEMENT
ENSEMBLE MOTORÉDUCTEUR

(30) Priorität: 06.03.2013 DE 102013003748
(43) Veröffentlichungstag der Anmeldung: 13.01.2016
(73) Patentinhaber: Sew-Eurodrive GmbH & Co. KG, 76646 Bruchsal (DE)
(72) Erfinder: DOLEJS, Jiri, 253 01 Hostivice (CZ); BARTUSEK, Jan, 338 43 Mirosov (CZ)
(86) Internationale Anmeldenummer: PCT/EP2014/000385
(87) Internationale Veröffentlichungsnummer: WO 2014/135246

(56) Entgegenhaltungen:
- WO-A1-2008/049545
- DE-A1-102011 017 458
- US-A- 3 168 665
- US-A1- 2006 138 780
- US-B1- 6 304 002

## Beschreibung

Die Erfindung betrifft eine Getriebemotoranordnung.

Aus der DE 10 2010 054 027 A1 ist bekannt, dass vier parallel ausgerichtete Motoren jeweils auf ihrer Rotorwelle ein Verzahnungsteil aufweisen, das jeweils mit einem Zahnrad eines Summiergetriebes im Eingriff steht. Dabei sind die Motoren mit einem stirnseitigen Flansch über einer entsprechend stirnseitigen Fläche eines Adapters am Summiergetriebe befestigt.

Aus der US 3 168 665 A ist eine Anordnung bekannt, bei der vier Motoren über jeweils ein Ritzel eines jeweiligen Getriebes ein Summierrad antreiben. Allerdings sind diese Getriebe und das Summierrad in einem gemeinsamen, insbesondere nicht-modular aufgebauten, Gehäuse aufgenommen, so dass bei Weglassen eines der Getriebe das Gehäuse nicht verkleinerbar ist.

Der Erfindung liegt daher die Aufgabe zugrunde, eine Getriebemotoranordnung weiterzubilden.

Erfindungsgemäß wird die Aufgabe bei der Getriebemotoranordnung nach den in Anspruch 1 angegebenen Merkmalen gelöst.

Wichtige Merkmale der Erfindung bei der Getriebemotoranordnung sind, dass zwei oder mehr Getriebemotoren an einem Zentralgehäuseteil befestigt sind,
wobei jeder Getriebemotor ein Getriebe aufweist, das von einem jeweiligen Elektromotor des jeweiligen Getriebemotors antreibbar ist,
wobei jeweils ein mit der abtreibenden Welle des jeweiligen Getriebes verbundenes Zahnrad, also Abtriebs-Zahnrad, mit einem Zahnrad, also Summier-Zahnrad, im Eingriff steht, das mit einer Welle drehfest verbunden ist, welche in dem Zentralgehäuseteil gelagert ist,
wobei die mit der abtreibenden Welle des jeweiligen Getriebes verbundenen Zahnräder, also Abtriebs-Zahnräder, in Umfangsrichtung zur Wellenachse der Welle voneinander beabstandet sind, insbesondere regelmäßig beabstandet sind.

Von Vorteil ist dabei, dass die Drehmomente der Getriebemotoren zusammengeführt werden und das Zentralgehäuseteil somit eine Summiergetriebestufe aufweist. Darüber hinaus ist im Zentralgehäuseteil das Zahnrad mit einer Welle drehfest verbunden, welche im Zentralgehäuseteil über zwei Lager, beispielsweise Kugellager oder Schrägrollenlager 52 oder ein über zwei, jeweils in X-Anordnung ausgeführten Kegelrollenlagerpaare, gelagert ist und außerdem noch mittels eines Axiallagers, das an der von der anzutreibenden Maschine abgewandten axialen Seite angeordnet ist. Somit sind sogar von der anzutreibenden Maschine eingebrachte Axialkräfte abfangbar.

Erfindungsgemäß sind die Rotorwellen der Elektromotoren parallel zueinander ausgerichtet. Von Vorteil ist dabei, dass eine einfache Montage ausführbar ist.

Erfindungsgemäß ist zwischen dem Zentralgehäuseteil und jedem Getriebe eines jeweiligen Getriebemotors eine Schnittstelle angeordnet, die jeweils einen planen Flächenabschnitt am Zentralgehäuseteil umfasst und ein Lochbild von Bohrungen für Befestigungsmittel, insbesondere Bohrungen oder Gewindebohrungen für Schrauben, und für Zentriermittel, insbesondere Bohrungen für Zentriermittel,
wobei die Normalenrichtungen der planen Flächenabschnitte senkrecht zur jeweiligen, insbesondere zu jeder, Rotorwellenachse der Elektromotoren ausgerichtet sind,
wobei die Normalenrichtungen der in Umfangsrichtung zueinander nächstbenachbarten planen Flächenabschnitte zueinander senkrecht ausgerichtet sind. Von Vorteil ist dabei, dass drei oder vier und bei polygonaler Ausführung des Zentralgehäuseteils sogar eine höhere Vielzahl von Getriebemotoren am Zentralgehäuseteil befestigbar ist.

Dabei sind die Getriebe seitlich, also radial um die im Zentralgehäuseteil gelagerte Welle angeordnet. Auf diese Weise ist in axialer Richtung Bauraum einsparbar. Außerdem ist eine verbesserte Kühlung erreicht, da die Getriebemotoren strahlenförmig angeordnet sind und somit zwischen ihnen in Umfangsrichtung ein großer Abstand besteht, der von Umgebungsluft durchströmbar ist.

Bei einer vorteilhaften Ausgestaltung ist das Getriebe jeweils mehrstufig ausgeführt. Von Vorteil ist dabei, dass hohe Unter- oder Übersetzungen erreichbar sind.

Bei einer vorteilhaften Ausgestaltung sind im Getriebegehäuseteil zwei Lager aufgenommen, mittels derer jeweils eine Welle des Getriebes gelagert ist, wobei die beiden Wellen auf ihrem durch die Wandung des Getriebegehäuseteils hindurchragenden axialen Bereich jeweils mit einem Zahnrad drehfest verbunden sind, wobei diese beiden Zahnräder im Eingriff miteinander sind,
insbesondere wobei also die beiden Zahnräder auf der vom Innenraum des Getriebes oder von den sonstigen Zahnrädern des Getriebes abgewandten Seite der Wandung des Getriebegehäuseteils angeordnet sind. Von Vorteil ist dabei, dass ein Wechsel der Zahnräder dieser Zwischengetriebestufe einfach ausführbar ist, indem der Gehäusedeckel abgenommen wird und dann die Räder getauscht werden. Auf diese Weise ist eine Änderung der Übersetzung oder Untersetzung in einfacher Weise erreichbar.

Bei einer vorteilhaften Ausgestaltung sind die beiden hindurchragenden axialen Bereiche von einem Gehäusedeckel abgedeckt, der mit dem Getriebegehäuseteil lösbar verbunden ist,
insbesondere zum Austausch der beiden auf den axial hindurchragendes Abschnitten der beiden Wellen drehfest verbundenen Zahnräder. Von Vorteil ist dabei, dass die Zwischenstufe auch mit Öl schmierbar ist, wobei vor dem Austausch der Zahnräder, also vor dem Entfernen des Gehäusedeckels das Öl aus dem Bereich der Zwischenstufe entfernt werden muss.

Bei einer vorteilhaften Ausgestaltung ist das Gehäuse der anzutreibenden Maschine mittels Zugstangen mit dem Zentralgehäuseteil verbunden,
insbesondere wobei die Zugstangen durch durch das Zentralgehäuseteil durchgehende Ausnehmungen geführt sind, insbesondere zur Erhöhung der Steifigkeit des Zentralgehäuseteils und eines daran vorgesehenen Axiallagers für die im Zentralgehäuseteil gelagerte Welle,
insbesondere wobei die Zugstangen durch die Eckbereiche des Zentralgehäuseteils hindurchgehen, insbesondere welche den größten Radialabstand aufweisen,
insbesondere wobei vier Zugstangen vorgesehen sind. Von Vorteil ist dabei, dass die Steifigkeit erhöht wird und somit die Axiallagerung der im Zentralgehäuseteil gelagerten Welle effektiver wirksam ist.

Bei einer vorteilhaften Ausgestaltung ist am von der anzutreibenden Maschine abgewandten axialen Ende der im Zentralgehäuseteil gelagerten Welle ein Axiallager angeordnet,
insbesondere wobei das Axiallager zwischen der Welle und einem Gehäusedeckel angeordnet ist, der mit dem Zentralgehäuseteil verbunden ist, insbesondere schraubverbunden ist, oder der mit dem Zentralgehäuseteil einstückig, insbesondere also einteilig, ausgeführt ist. Von Vorteil ist dabei, dass eine von der anzutreibenden Maschine eingeleitete Axialkraft ableitbar ist ans Zentralgehäuseteil.

Bei einer vorteilhaften Ausgestaltung ist zwischen jedem Elektromotor des jeweiligen Getriebemotors und dem Getriebe des Getriebemotors jeweils eine Kupplung angeordnet. Von Vorteil ist dabei, dass fehlerhafte relative Ausrichtungen der Rotorwelle zur eintreibenden Welle des Getriebes ausgleichbar sind.

Bei einer vorteilhaften Ausgestaltung sind die Getriebemotoren vom Zentralgehäuseteil gehalten. Von Vorteil ist dabei, dass Befestigungsmaterial einsparbar ist.

Bei einer vorteilhaften Ausgestaltung ist das Zentralgehäuseteil von der anzutreibenden Maschine gehalten. Von Vorteil ist dabei, dass kein Fussabschnitt notwendig ist und somit Material einsparbar ist.

Weitere Vorteile ergeben sich aus den Unteransprüchen.

Die Erfindung wird nun anhand von Abbildungen näher erläutert:
In der Figur 1 ist ein erstes erfindungsgemäßes Ausführungsbeispiel im Querschnitt gezeigt, wobei das Zentralgehäuseteil 1 einen Fussabschnitt aufweist.

In der Figur 2 ist eine Seitenansicht hierzu gezeigt.

In der Figur 3 ist ein Längsschnitt gezeigt, wobei die Motoren nicht geschnitten dargestellt sind.

In der Figur 4 ist eine Vorderansicht gezeigt.

In der Figur 5 ist ein weiteres Ausführungsbeispiel im Querschnitt gezeigt.

In der Figur 6 ist eine zugehörige Vorderansicht gezeigt.

In der Figur 7 ist eine Schrägansicht des ersten Ausführungsbeispiels gezeigt.

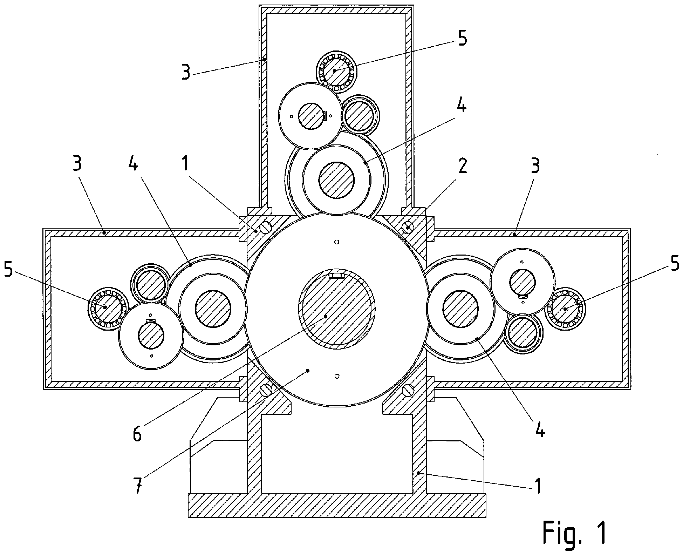

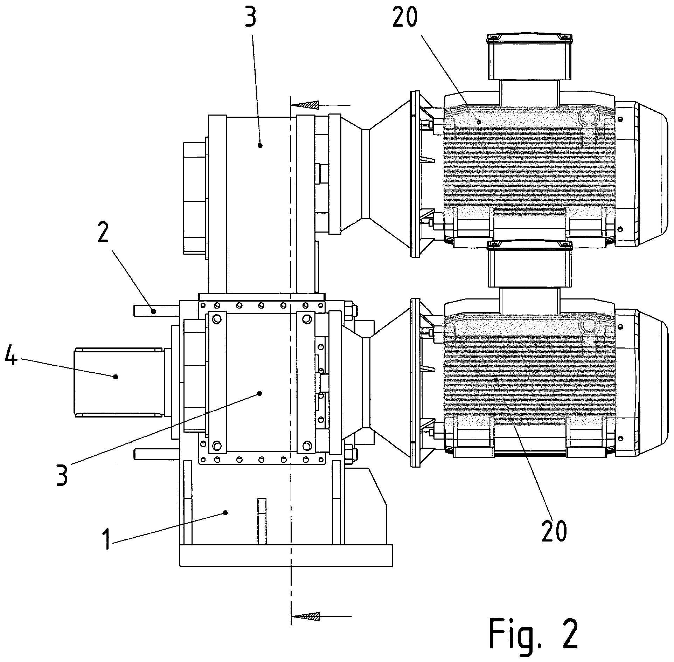

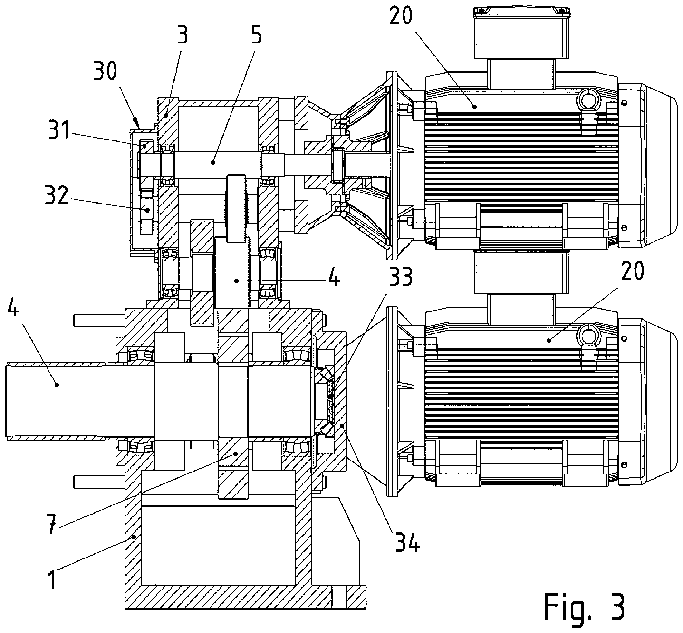

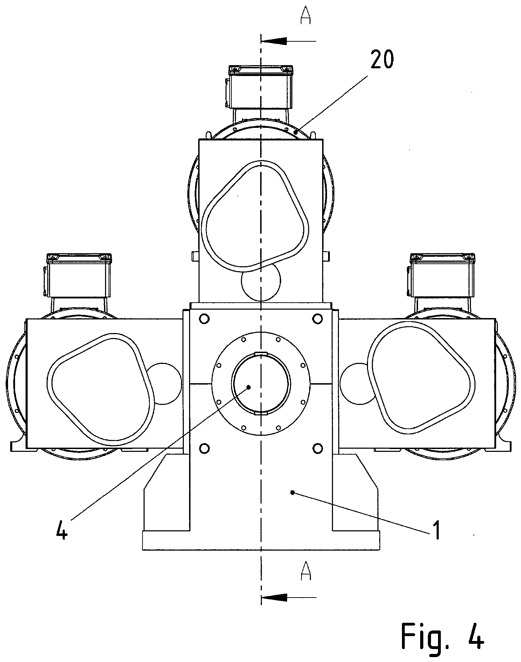

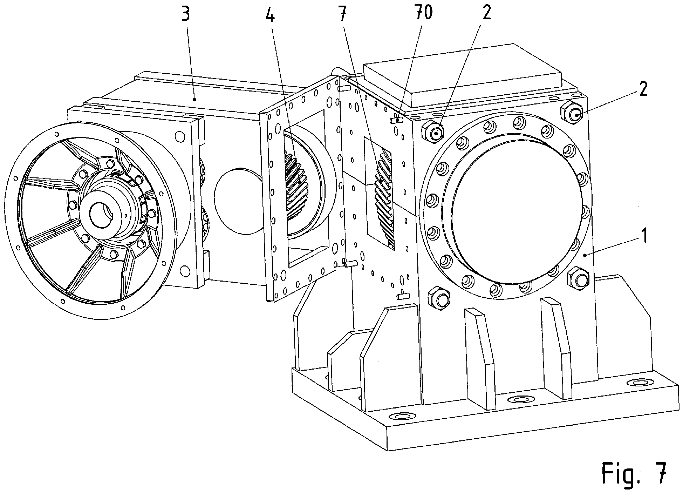

Wie in den Figuren 1, 2, 3, 4 und 7 gezeigt, weist das Zentralgehäuseteil 1 drei Schnittstellen zum Verbinden, insbesondere Anflanschen, eines jeweiligen Getriebemotors auf. Dabei sind die Getriebemotoren gleichartig aufgebaut und die Schnittstellen gleichartig ausgeführt.

Die Schnittstellen weisen einerseits Zentriermittel, insbesondere Zentrierstifte 60, auf und andererseits ein Lochbild von Gewindebohrungen für Verbindungsschrauben sowie Zugstangen 2.

Jede Schnittstelle weist einen planen Flächenabschnitt am Zentralgehäuseteil 1 auf, in welchem die Gewindebohrungen eingebracht sind und die Zentrierstifte in Bohrungen eingesteckt sind. Somit ist das Getriebegehäuseteil 3 mit der entsprechenden Schnittstelle, also einem planen Flächenabschnitt, in welchem Bohrungen, insbesondere Durchgangsbohrungen, eingebracht sind und Zentrierbohrungen. Somit ist das Getriebegehäuseteil 3 derart an der Schnittstelle des Zentralgehäuseteils 1 aufsetzbar, dass die Verbindungsschrauben durch die Durchgangsbohrungen des Getriebegehäuseteils 3 durchführbar und in die Gewindebohrungen des Zentralgehäuseteils 1 einschraubbar sind. Dabei wird beim Ansetzen des Getriebegehäuseteils 3 an das Zentralgehäuseteil 1 dieses zentriert mittels der in Zentrierbohrungen eingesetzten Zentrierstifte 70. Zusätzlich ist im Bereich der Schnittstelle eine Dichtung vorgesehen, insbesondere eine Flachdichtung aus Gummi, so dass der vom Getriebegehäuseteil 3 umgebene Innenraum öldicht mit dem vom Zentralgehäuseteil 1 umgebenen Innenraum verbunden ist.

Somit ist bei dem Ausführungsbeispiel ein horizontaler und zwei vertikale plane Flächenabschnitte vorhanden.

Jeder Getriebemotor weist einen Motor mit Motorgehäuse 20 auf, der ein Getriebe antreibt, welches im Getriebegehäuseteil 3 angeordnet ist. Das Getriebe ist mehrstufig ausgeführt, so dass die mit der Rotorwelle des Motors verbundene oder einstückig ausgeführte eintreibende Welle 5 mit einem Zahnrad drehfest verbunden ist, welches mit einem ersten Zahnrad 31 im Eingriff ist, welches mit einer ersten Zwischenwelle drehfest verbunden ist. Ein zweites Zahnrad 32 ist auf einer weiteren Zwischenwelle drehfest verbunden und steht im Eingriff mit dem ersten Zahnrad 31. Dabei sind die beiden Zwischenwellen über Lager im Getriebegehäuseteil 3 gelagert. Jeweils eines der Lager der Zwischenwelle ist in einer Gehäusewand des Getriebegehäuseteils 3 angeordnet. Die beiden Zwischenwellen ragen durch die Lager und die Gehäusewand hindurch und auf der der äußeren Umgebung zugewandten Seite hervor. Das erste Zahnrad 31 und das zweite Zahnrad 32 sind auf der der äußeren Umgebung zugewandten Seite angeordnet. Somit sind also die beiden Lager und die Gehäusewand zwischen dem Innen raum des Getriebegehäuseteils 3 und den beiden Zahnrädern (31, 32) angeordnet. Ein Gehäusedeckel 30 deckt die herausragenden Endbereiche der beiden Zwischenwellen und die darauf drehfest verbundenen Zahnräder (31, 32) ab und ist dicht und lösbar mit dem Getriebegehäuseteil 3 verbunden. Auf diese Weise ist ein Austausch der beiden Zahnräder (31, 32) in einfacher Weise ermöglicht. Denn es müssen nur die den Gehäusedeckel 30 mit dem Getriebegehäuseteil 3 verbindenden Schrauben gelöst werden und dann der Gehäusedeckel 30 abgehoben werden. Ein Austausch der sodann leicht zugänglichen Zahnräder (31, 32) ist somit ohne einen Ausbau der Zwischenwellen aus dem Getriebe ermöglicht.

Das abtreibende Zahnrad 4 des jeweiligen Getriebes ist jeweils im Eingriff mit einem Zahnrad 7, das mit einer Welle 6 drehfest verbunden ist, welche im Zentralgehäuseteil 1 gelagert ist und das Gesamtdrehmoment an ein drehbar gelagertes Teil in der anzutreibenden Maschine weiterleitet.

Die einzelnen Drehmomente der jeweiligen Getriebemotoren werden also mittels des Zahnrades 7 zusammengeführt, insbesondere summiert, und an die anzutreibende Maschine weitergeleitet.

Die Abtriebsräder 4 der jeweiligen Getriebe sind in Umfangsrichtung regelmäßig voneinander beabstandet. Im Ausführungsbeispiel ist hierbei ein Umfangswinkel von 90° ausgeführt.

Mit seinem Fussabschnitt ist das Zentralgehäuseteil 1 am Boden aufstellbar und anmontierbar.

Somit sind die Elektromotoren der Getriebemotoren vom Getriebe gehalten. Die Getriebe wiederum sind vom Zentralgehäuseteil 1 gehalten.

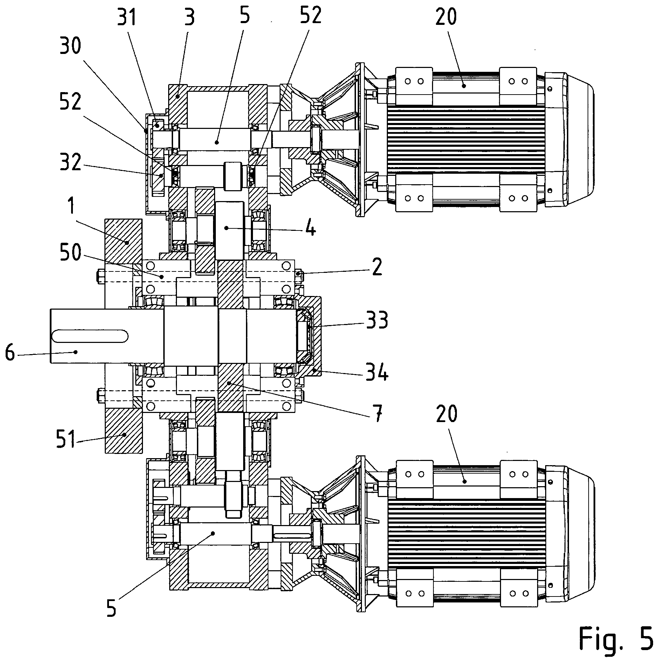

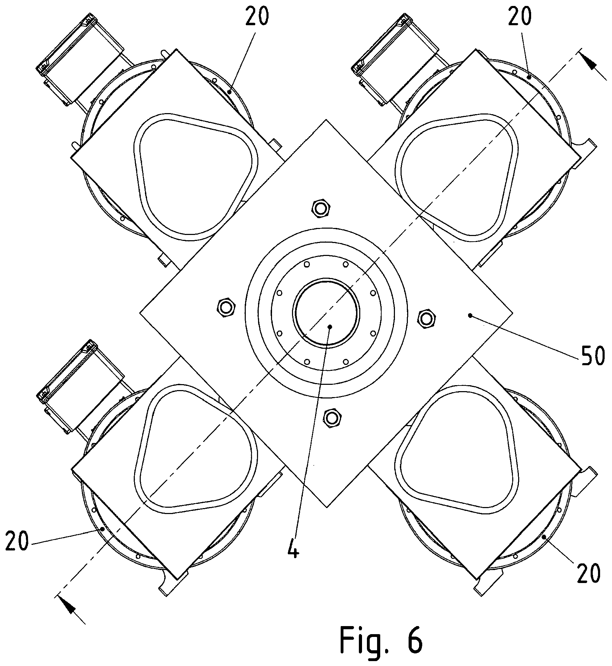

Wie in der Figur 5 und 6 dargestellt, ist auch eine Ausführung des Zentralgehäuseteils 50 ohne Fussabschnitt ermöglicht. Somit sind statt der im obengenannten Ausführungsbeispiel gezeigten drei Getriebemotoren sogar vier Getriebemotoren anbaubar.

Das Zentralgehäuseteil 50 ist mit Zugstangen 2 an dem Gehäuseteil 51 der anzutreibenden Maschine verbunden. Hierbei ragen die Zugstangen 2 durch eine Ausnehmung im Zentralgehäuseteil 50 und im Gehäuseteil 51 hindurch. Beim Anziehen der an den Endbereichen der Zugstangen 2 angeordneten Muttern werden das Zentralgehäuseteil 50 und das Gehäuseteil 51 aneinander gedrückt und es wird dabei auch die Steifigkeit des Zentralgehäuseteils 50 erhöht.

Wie im Ausführungsbeispiel nach den Figuren 1 bis 4 und 7 gezeigt, ist auch bei dem Ausführungsbeispiel nach den Figuren 5 und 6 das Getriebe jedes der Getriebemotoren als Parallelwellengetriebe ausgeführt, so dass jede der eintreibenden Wellen 5 parallel zu der Welle 6 ausgerichtet ist und somit auch die Rotorwelle des jeweiligen Motors.

Die Rotorwellen oder Motoren sind somit radialstrahlenförmig ausgerichtet.

Die Welle 6 ist mittels eines Axiallagers 33, welches am von der anzutreibenden Maschine und deren Gehäuseteil 51 abgewandten axialen Ende der Welle 6 angeordnet ist, gegen einen Gehäusedeckel 34 gelagert, der mit dem Zentralgehäuseteil 1 verbunden, insbesondere schraubverbunden ist. Mittels des Anspannens der Zugstange 2 wird auch das Gehäuseteil 34 und somit das Axiallager 33 fest verspannt und somit versteift. Mittels des Axiallagers 33 werden die von der anzutreibenden Maschine eingeleitete Axialkräfte aufgenommen und über das Zentralgehäuseteil 50 abgeleitet.

Wichtig ist also bei der Erfindung, dass das Zentralgehäuseteil 1 einen polygonalen, also vieleckigen, Querschnitt aufweist, wobei die Normalenrichtung der Schnittebene parallel zur Wellenachse der Welle 6 ausgerichtet ist. Entlang jeder der Kanten des Polygons ist somit ein Getriebemotor anordenbar.

### Bezugszeichenliste

- 1: Zentralgehäuseteil
- 2: Zugstangen
- 3: Getriebegehäuseteil
- 4: Abtriebsrad
- 5: eintreibende Welle
- 6: Welle
- 7: Zahnrad
- 20: Motorgehäuse
- 30: Gehäusedeckel
- 31: erstes Zahnrad
- 32: zweites Zahnrad
- 33: Axiallager
- 34: Gehäusedeckel
- 50: Zentralgehäuseteil
- 51: Gehäuseteil der angetriebenen Maschine
- 52: Schrägrollenlager
- 70: Zentrierstifte

## Patentansprüche

1. Getriebemotoranordnung,
wobei zwei oder mehr Getriebemotoren an einem Zentralgehäuseteil (1, 50) befestigt sind, wobei jeder Getriebemotor ein Getriebe aufweist, das von einem jeweiligen Elektromotor des jeweiligen Getriebemotors antreibbar ist,
wobei jeweils ein mit der abtreibenden Welle des jeweiligen Getriebes verbundenes Zahnrad, also Abtriebs-Zahnrad, mit einem Zahnrad, also Summier-Zahnrad, im Eingriff steht, das mit einer Welle drehfest verbunden ist, welche in dem Zentralgehäuseteil (1, 50) gelagert ist,
wobei die mit der abtreibenden Welle des jeweiligen Getriebes verbundenen Zahnräder, also Abtriebs-Zahnräder, in Umfangsrichtung zur Wellenachse der Welle voneinander beabstandet sind, insbesondere regelmäßig beabstandet sind,
wobei die Rotorwellen der Elektromotoren parallel zueinander ausgerichtet sind,
wobei zwischen dem Zentralgehäuseteil (1, 50) und jedem Getriebe eines jeweiligen Getriebemotors eine Schnittstelle angeordnet ist, die jeweils einen planen Flächenabschnitt am Zentralgehäuseteil (1, 50) umfasst und ein Lochbild von Bohrungen für Befestigungsmittel, insbesondere Bohrungen oder Gewindebohrungen für Schrauben, und für Zentriermittel, insbesondere Bohrungen für Zentriermittel,
wobei die Normalenrichtungen der planen Flächenabschnitte senkrecht zur jeweiligen, insbesondere zu jeder, Rotorwellenachse der Elektromotoren ausgerichtet sind.
wobei die Normalenrichtungen der in Umfangsrichtung zueinander nächstbenachbarten planen Flächenabschnitte zueinander senkrecht ausgerichtet sind.

2. Getriebemotoranordnung nach Anspruch 1,
**dadurch gekennzeichnet, dass**
das Getriebe jeweils mehrstufig ausgeführt ist.

3. Getriebemotoranordnung nach einem der vorangegangenen Ansprüche,
**dadurch gekennzeichnet, dass**
im Getriebegehäuseteil (3) zwei Lager aufgenommen sind, mittels derer jeweils eine Welle des Getriebes gelagert ist, wobei die beiden Wellen auf ihrem durch die Wandung des Getriebegehäuseteils (3) hindurchragenden axialen Bereich jeweils mit einem Zahnrad drehfest verbunden sind, wobei diese beiden Zahnräder im Eingriff miteinander sind, insbesondere wobei also die beiden Zahnräder auf der vom Innenraum des Getriebes oder von den sonstigen Zahnrädern des Getriebes abgewandten Seite der Wandung des Getriebegehäuseteils (3) angeordnet sind.

4. Getriebemotoranordnung nach einem der vorangegangenen Ansprüche,
**dadurch gekennzeichnet, dass**
die beiden hindurchragenden axialen Bereiche von einem Gehäusedeckel (34) abgedeckt sind, der mit dem Getriebegehäuseteil (3) lösbar verbunden ist,
insbesondere zum Austausch der beiden auf den axial hindurchragendes Abschnitten der beiden Wellen drehfest verbundenen Zahnräder.

5. Getriebemotoranordnung nach einem der vorangegangenen Ansprüche,
**dadurch gekennzeichnet, dass**
das Gehäuse der anzutreibenden Maschine mittels Zugestangen mit dem Zentralgehäuseteil (1, 50) verbunden ist,
insbesondere wobei die Zugstangen (2) durch durch das Zentralgehäuseteil (1, 50) durchgehende Ausnehmungen geführt sind, insbesondere zur Erhöhung der Steifigkeit des Zentralgehäuseteils (1, 50) und eines daran vorgesehenen Axiallagers (33) für die im Zentralgehäuseteil (1, 50) gelagerte Welle,
insbesondere wobei die Zugstangen (2) durch die Eckbereiche des Zentralgehäuseteils (1, 50) hindurchgehen, insbesondere welche den größten Radialabstand aufweisen, insbesondere wobei vier Zugstangen (2) vorgesehen sind.

6. Getriebemotoranordnung nach einem der vorangegangenen Ansprüche,
**dadurch gekennzeichnet, dass**
am von der anzutreibenden Maschine abgewandten axialen Ende der im Zentralgehäuseteil (1, 50) gelagerten Welle ein Axiallager (33) angeordnet ist,
insbesondere wobei das Axiallager (33) zwischen der Welle und einem Gehäusedeckel (34) angeordnet ist, der mit dem Zentralgehäuseteil (1, 50) verbunden ist, insbesondere schraubverbunden ist, oder der mit dem Zentralgehäuseteil (1, 50) einstückig, insbesondere also einteilig, ausgeführt ist.

7. Getriebemotoranordnung nach einem der vorangegangenen Ansprüche,
**dadurch gekennzeichnet, dass**
zwischen jedem Elektromotor des jeweiligen Getriebemotors und dem Getriebe des Getriebemotors jeweils eine Kupplung angeordnet ist.

8. Getriebemotoranordnung nach einem der vorangegangenen Ansprüche,
**dadurch gekennzeichnet, dass**
die Getriebemotoren vom Zentralgehäuseteil (1, 50) gehalten sind,
und/oder dass
das Zentralgehäuseteil (1, 50) von der anzutreibenden Maschine gehalten ist.

## Claims

1. A geared motor arrangement,
wherein two or more geared motors are fastened to a central housing part (1, 50),
wherein each geared motor has a transmission which can be driven by a respective electric motor of the respective geared motor,
wherein in each case a gear wheel connected to the output shaft of the respective transmission, i.e. output gear wheel, is engaged with a gear wheel, i.e. summation gear wheel, which is connected in rotation-resistant manner to a shaft which is mounted in the central housing part (1, 50),
wherein the gear wheels connected to the output shaft of the respective transmission, i.e. output gear wheels, are spaced apart from each other in the circumferential direction from the shaft axis of the shaft, in particular are regularly spaced apart,
wherein the rotor shafts of the electric motors are oriented parallel to each other,
wherein an interface is arranged between the central housing part (1, 50) and each transmission of a respective geared motor, which interface in each case comprises a planar surface portion on the central housing part (1, 50) and a pattern of holes of bores for fastening means, in particular bores or threaded bores for screws, and for centring means, in particular bores for centring means,
wherein the normal directions of the planar surface portions are oriented perpendicular to the respective, in particular to each, rotor-shaft axis of the electric motors,
wherein the normal directions of the planar surface portions next adjacent to each other in the circumferential direction are oriented perpendicularly to each other.

2. A geared motor arrangement according to Claim 1,
**characterised in that**
the transmission in each case is embodied as a multi-stage transmission.

3. A geared motor arrangement according to one of the preceding claims,
**characterised in that**
two bearings are received in the gear housing part (3), by means of which bearings in each case a shaft of the transmission is mounted, the two shafts on their axial region which protrudes through the wall of the gear housing part (3) being connected in rotation-resistant manner in each case to a gear wheel, these two gear wheels being engaged with each other,
in particular therefore the two gear wheels being arranged on the side of the wall of the gear housing part (3) which is remote from the interior of the transmission or from the other gear wheels of the transmission.

4. A geared motor arrangement according to one of the preceding claims,
**characterised in that**
the two axial regions which protrude through are covered by a housing cover (34) which is detachably connected to the gear housing part (3),
in particular for exchanging the two gear wheels which are connected in rotation-resistant manner on the portions of the two shafts which protrude through axially.

5. A geared motor arrangement according to one of the preceding claims, **characterised in that**
the housing of the machine which is to be driven is connected to the central housing part (1, 50) by means of tension rods,
in particular wherein the tension rods (2) are guided through cutouts which pass through the central housing part (1, 50), in particular to increase the rigidity of the central housing part (1, 50) and of an axial bearing (33) provided thereon for the shaft mounted in the central housing part (1, 50),
in particular wherein the tension rods (2) pass through the comer regions of the central housing part (1, 50), in particular which have the greatest radial distance,
in particular wherein four tension rods (2) are provided.

6. A geared motor arrangement according to one of the preceding claims,
**characterised in that**
an axial bearing (33) is arranged on the axial end, remote from the machine which is to be driven, of the shaft mounted in the central housing part (1, 50),
in particular the axial bearing (33) being arranged between the shaft and a housing cover (34) which is connected, in particular is screw-connected, to the central housing part (1, 50), or which is designed integrally, in particular therefore in one part, with the central housing part (1, 50).

7. A geared motor arrangement according to one of the preceding claims,
**characterised in that**
in each case a clutch is arranged between each electric motor of the respective geared motor and the transmission of the geared motor.

8. A geared motor arrangement according to one of the preceding claims,
**characterised in that**
the geared motors are held by the central housing part (1, 50),
and/or **in that**
the central housing part (1, 50) is held by the machine which is to be driven.

## Revendications

1. Ensemble motoréducteur
dans lequel des moteurs à engrenages, au nombre de deux ou plus, sont fixés à une partie (1, 50) formant carter central,
chaque moteur à engrenage étant muni d'une transmission pouvant être entraînée par un moteur électrique respectif du moteur à engrenage considéré,
sachant qu'une roue dentée reliée à l'arbre de sortie de la transmission considérée, c'est-à-dire une roue dentée de sortie, est en prise avec une roue dentée, plus précisément une roue dentée sommatrice verrouillée en rotation avec un arbre monté dans ladite partie (1, 50) formant carter central,
les roues dentées reliées à l'arbre de sortie de la transmission considérée, c'est-à-dire les roues dentées de sortie, étant mutuellement espacées par rapport à l'axe dudit arbre dans la direction périphérique, notamment espacées d'intervalles réguliers,
les arbres rotoriques des moteurs électriques étant orientés avec parallélisme mutuel, sachant qu'un interface, situé entre la partie (1, 50) formant carter central et chaque transmission d'un moteur à engrenage considéré, est respectivement pourvu d'une zone de surface plane sur ladite partie (1, 50) formant carter central, et d'une constellation perforée présentant des trous dédiés à des moyens de fixation, en particulier des alésages ou des perçages taraudés affectés à des vis et à des moyens de centrage, notamment des alésages dévolus à des moyens de centrage,
les directions des normales des zones de surface planes étant orientées perpendiculairement à l'axe respectif, en particulier à chaque axe d'arbre rotorique des moteurs électriques,
les directions des normales des zones de surface planes les plus intimement voisines, dans la direction périphérique, étant orientées perpendiculairement les unes aux autres.

2. Ensemble motoréducteur selon la revendication 1,
**caractérisé par le fait que**
la transmission est respectivement réalisée en plusieurs étages.

3. Ensemble motoréducteur selon l'une des revendications précédentes,
**caractérisé par le fait que**
la partie (3) formant carter de transmission renferme deux paliers assurant respectivement le montage d'un arbre de la transmission, les deux arbres étant verrouillés en rotation avec une roue dentée respective dans leur région axiale traversant la paroi de ladite partie (3) formant carter de transmission, ces deux roues dentées étant en prise mutuelle,
sachant notamment, par conséquent, que les deux roues dentées sont placées du côté de ladite paroi de la partie (3) formant carter de transmission qui est tourné à l'opposé de l'espace interne de la transmission, ou des autres roues dentées de ladite transmission.

4. Ensemble motoréducteur selon l'une des revendications précédentes,
**caractérisé par le fait que**
les deux régions axiales traversantes sont recouvertes par un couvercle (34) de carter relié, de manière amovible, à la partie (3) formant carter de transmission,
notamment en vue du remplacement des deux roues dentées verrouillées en rotation avec les segments des deux arbres qui sont en saillie traversante dans la direction axiale.

5. Ensemble motoréducteur selon l'une des revendications précédentes,
**caractérisé par le fait que**
le carter de la machine devant être entraînée est relié, au moyen de tirants, à la partie (1, 50) formant carter central,
sachant, en particulier, que lesdits tirants (2) sont guidés à travers des évidements traversant la partie (1, 50) formant carter central, notamment en vue d'accroître la rigidité de ladite partie (1, 50) formant carter central, et d'un palier axial (33) prévu sur cette dernière et affecté à l'arbre monté dans ladite partie (1, 50) formant carter central,
étant notamment précisé que lesdits tirants (2) traversent les zones d'angle de ladite partie (1, 50) formant carter central qui présentent, en particulier, l'espacement radial maximal, sachant que quatre tirants (2) sont prévus en particulier.

6. Ensemble motoréducteur selon l'une des revendications précédentes,
**caractérisé par le fait**
**qu'**un palier axial (33) est implanté à l'extrémité axiale, tournée à l'opposé de la machine devant être entraînée, de l'arbre monté dans la partie (1, 50) formant carter central, sachant, en particulier, que ledit palier axial (33) est interposé entre ledit arbre et un couvercle (34) de carter qui est relié à ladite partie (1, 50) formant carter central, notamment par vissage, ou est réalisé d'une seule pièce, c'est-à-dire, en particulier, d'un seul tenant avec ladite partie (1, 50) formant carter central.

7. Ensemble motoréducteur selon l'une des revendications précédentes,
**caractérisé par le fait**
**qu'**un accouplement respectif est interposé entre chaque moteur électrique du moteur à engrenage considéré, et la transmission dudit moteur à engrenage.

8. Ensemble motoréducteur selon l'une des revendications précédentes,
**caractérisé par le fait que**
les moteurs à engrenages sont retenus par la partie (1, 50) formant carter central,
et/ou que
ladite partie (1, 50) formant carter central est retenue par la machine devant être entraînée.
